(19) Europäisches Patentamt / European Patent Office / Office européen des brevets

(11) **EP 4 556 330 A1**

(12) **EUROPEAN PATENT APPLICATION**

(43) Date of publication:
**21.05.2025 Bulletin 2025/21**

(21) Application number: **23209574.5**

(22) Date of filing: **14.11.2023**

(51) International Patent Classification (IPC):
*B60T 13/74* (2006.01)        *B60T 8/17* (2006.01)
*B60T 8/171* (2006.01)        *B60T 8/1763* (2006.01)
*B60T 17/22* (2006.01)        *B60T 8/172* (2006.01)
*B60T 8/18* (2006.01)

(52) Cooperative Patent Classification (CPC):
**B60T 17/228; B60T 8/1705; B60T 8/172;**
**B60T 8/1763; B60T 8/1893; B60T 13/665;**
**B60T 13/741;** B60T 2210/12; B60T 2240/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Dellner Bubenzer AB**
**781 70 Borlänge (SE)**

(72) Inventor: **GUSTAVSSON, Claes-Göran**
**723 53 Västerås (SE)**

(74) Representative: **Brann AB**
**P.O. Box 3690**
**Sveavägen 63**
**103 59 Stockholm (SE)**

(54) **RAIL VEHICLE, CONTROLLER FOR ELECTRICALLY OPERATED BRAKE UNITS, COMPUTER-IMPLEMENTED METHOD THEREFOR, COMPUTER PROGRAM AND NON-VOLATILE DATA CARRIER**

(57)     A controller (140) controls a set of electrically operated brake units (141a, 151a; 141b, 151b; 142a, 152a; 142b, 152b; 143a, 153a; 143b, 153b; 144a, 154a; 144b, 154b) of a rail vehicle (100), which has wheels arranged in pairs of first and second wheels on a respective common wheel axle (131, 132, 133, 134), where each wheel is individually braked via a respective brake unit in the set of electrically operated brake units. The controller (140) repeatedly determines a respective adhesion parameter ($\mu_{1a}$, $\mu_{1a}$, $\mu_{2a}$, $\mu_{2b}$, $\mu_{3a}$, $\mu_{3b}$, $\mu_{4a}$, $\mu_{4b}$) reflecting a friction coefficient between each wheel (101a, 101b, 102a, 102b, 103a, 103b, 104a, 104b) of the rail vehicle (100) and a rail upon which the wheel travels. The controller (140) compares repeatedly compares the respective adhesion parameters ($\mu_{1a}$, $\mu_{1b}$, $\mu_{2a}$, $\mu_{2b}$, $\mu_{3a}$, $\mu_{3b}$, $\mu_{4a}$, $\mu_{4b}$) pairwise to one another. In each pair, first and second adhesion parameters ($\mu_{1a}$, $\mu_{1b}$; $\mu_{2a}$, $\mu_{2b}$; $\mu_{3a}$, $\mu_{3b}$; $\mu_{4a}$, $\mu_{4b}$) are compared to one another, which adhesion parameters have been determined for the first and second wheels on the common wheel axle (131, 132, 133, 134). The controller (140) reports a respective adhesion parameter ($\mu_{1}$, $\mu_{2}$, $\mu_{3}$, $\mu_{4}$) for one of said common wheel axles (131, 132, 133, 134) if and only if a ratio ($\mu_{a}/\mu_{b}$) between the first and second adhesion parameters ($\mu_{1a}$, $\mu_{1b}$; $\mu_{2a}$, $\mu_{2b}$; $\mu_{3a}$, $\mu_{3b}$; $\mu_{4a}$, $\mu_{4b}$) is within a first predefined threshold interval (EQ1) around a factor one.

Fig. 1b

**Description**

TECHNICAL FIELD

The present invention relates generally to retardation of rail vehicles. Especially, the invention relates to a controller for controlling a set of electrically operated brake units of a rail vehicle according to the preamble of claim 1 and a rail vehicle including such a controller. The invention also relates to a computer-implemented method, a computer program and a non-volatile data carrier storing such a computer program.

BACKGROUND

The length of rail vehicles may vary substantially from single car carriages to extremely long combinations of connected carriages being several kilometers long. In the former case, it is reasonable to expect that the adhesion conditions are essentially identical for all the wheels of the rail vehicle. In the latter case, however, it is highly probable that the adhesion conditions vary, at least to some extent, along the extension of the rail vehicle.

Therefore, for optimal brake performance a non-uniform brake load distribution should be applied, such that a relatively high brake load is applied where the adhesion conditions are comparatively beneficial, and vice versa. Traditionally, if a non-uniform brake load distribution is applied, the brake load is shifted slightly towards the front brake units of the rail vehicle, so that a somewhat higher brake load is allocated in the front than in the rear of the rail vehicle. Such a brake load distribution may, however, not always be ideal. For example, if there are leaves or snow on the tracks, the front wheels will typically experience a lower friction than the rear wheels because when the rear wheels reach the problematic track section, the front wheels have already cleared the tracks more or less. Inter alia, due to factors like the above, it is far from trivial to attain an optimal brake load distribution in a rail vehicle. In general, today's approach is based on theoretical friction coefficients and relies on a restrictive brake performance, where the brake force may be rapidly reduced by a wheel slide protection (WSP) system. Additionally, the brake force is normally determined by testing on slippery tracks. Consequently, the friction coefficient is determined as a function of WSP efficacy, which, of course, may be very misleading.

To enable the brake force to be applied in a truly dynamic and distributed manner, the adhesion conditions for each wheel must be known with high accuracy in real time.

SUMMARY

The object of the present invention is to solve the above problem and offer a solution that enables highly efficient braking of rail vehicles.

According to one aspect of the invention, the object is achieved by a controller for controlling a set of electrically operated brake units of a rail vehicle. The controller is configured to determine, repeatedly, a respective adhesion parameter that reflects a friction coefficient between each wheel of the rail vehicle and a rail upon which the wheel travels. The wheels are arranged in pairs of first and second wheels on a respective common wheel axle, and each wheel is individually braked via a respective brake unit in the set of electrically operated brake units. The controller is configured to compare, repeatedly, the respective adhesion parameters pairwise to one another, wherein in each pair a first adhesion parameter is compared to a second adhesion parameter, which first adhesion parameter has been determined for the first wheel on the common wheel axle and which second adhesion parameter has been determined for the second wheel on the common wheel axle. The controller is configured to report a respective adhesion parameter for one of the common wheel axles if and only if a ratio between the first and second adhesion parameters is within a first predefined threshold interval around a factor one, i.e. if the first and second adhesion parameters are sufficiently similar to one another.

The above controller is advantageous because it avoids random hardware failures and ensures that exclusively those adhesion parameters are reported, which are deemed to reflect reliable and accurate values. Thus, a distributed brake force may be applied based on these values to attain efficient retardation of the rail vehicle.

According to one embodiment of this aspect of the invention, the controller is configured to set an axle-measurement alert in respect of a particular one of the common wheel axles, if, within a sequence of repeated determinations of the respective adhesion parameter, for example representing 0.1s, the ratio between the first and second adhesion parameters for the particular common wheel axle has not been within the first predefined threshold interval around the factor one at a specified fraction, say one third, of the determinations within said sequence of repeated determinations. Thereby, any measurement anomalies and/or erroneous components can be detected with very short notice.

According to another embodiment of this aspect of the invention, the controller is further configured to store a respective temporal sequence of adhesion parameters for each of the wheels, wherein each of the respective temporal sequences of adhesion parameters contains a set of consecutively determined adhesion parameters for a particular one of the wheels. Moreover, the controller is configured to set a first brake-measurement alert in respect of a first brake unit if the first brake unit and a second brake unit are arranged to brake the first and second wheels respectively on the particular one of the common wheel axles, the adhesion parameters in a first temporal sequence for a first wheel vary by more than a first tolerance threshold from one another, and the adhesion parameters in a second temporal sequence for a second wheel vary by less than or equal to the first tolerance threshold from one another, which second temporal sequence overlap the first temporal sequence. The first brake-measurement alert may thus reveal any unjustified large variations in the adhesion parameters derived from a particular wheel, which may indicate a malfunction and/or anomaly in the associated brake unit and/or the control system therefor. This, in turn, may serve as a basis for troubleshooting and/or maintenance measures.

According to yet another embodiment of this aspect of the invention, the rail vehicle contains a set of bogies each of which contains a pair of said common wheel axles. Here, the controller is configured to report a respective bogie adhesion parameter for a particular one of the bogies if and only if each of a respective pairwise ratio between first, second, third and fourth adhesion parameters is within a second predefined threshold interval around the factor one. Of course, the adhesion parameters for the wheels within a bogie must be allowed to vary more than for the wheels on the same axle. Analogous to the above, provided that the second predefined threshold is set to an appropriate value, any measurement anomalies and/or erroneous components in the bogie may thereby also be detected with very short notice.

According to a further embodiment of this aspect of the invention, the controller is configured to set a second brake-measurement alert in respect of a first brake unit in a bogie if the adhesion parameters in the first temporal sequence for the first wheel vary by more than a second tolerance threshold from one another, and the adhesion parameters in a respective temporal sequence for the other wheels in the bogie vary by less than or equal to the second tolerance threshold from one another, which respective temporal sequences overlap the first temporal sequence. The second brake-measurement alert may thus reveal any unjustified large variations in the adhesion parameters derived from a particular wheel included in a bogie, which variations may indicate a malfunction and/ or anomaly in the associated brake unit and/or the control system therefor. Namely, it is safe to assume that at most a single adhesion parameter out of the four adhesion parameters vary excessively within a period of time spanned by the temporal sequences. Consequently, the second brake-measurement alert may serve as a basis for troubleshooting and/or maintenance measures.

According to yet another embodiment of this aspect of the invention, the controller is configured to estimate a total weight of the rail vehicle based on a power signal indicating an amount of power produced by a set of drive units in the rail vehicle when accelerating the rail vehicle from a first speed to a second speed; and a speed signal indicating respective values of the first and second speeds. Namely, assuming that all the supplied power is converted into kinetic energy of the rail vehicle, it is straightforward to derive a measure of its overall weight.

According to still another embodiment of this aspect of the invention, the controller is configured to determine a particular adhesion parameter of the respective adhesion parameters, which particular adhesion parameter reflects the friction coefficient between a particular common wheel and the rail upon which that wheel travels by: (a) obtaining wheel speed signals indicating respective rotational speeds of each of the wheels of the rail vehicle; (b) controlling a specific brake unit to apply a gradually increasing brake force to the particular wheel; (c) determine, repeatedly, while controlling the specific brake unit to apply the gradually increasing brake force to the particular wheel, an absolute difference between the rotational speed of the particular wheel and an average rotational speed of all the wheels except the particular wheel; and in response to the absolute difference exceeding a threshold value (d) determine the particular adhesion parameter. Such controlled stressing of the adhesion interface renders it possible to estimate the friction coefficient very accurately with respect to each wheel of the rail vehicle.

Preferably, the controller is further configured to repeat steps (a) to (c) for each of the wheels as the particular wheel, based thereon estimate a respective weight fraction of the overall weight carried by each of the wheels.

According to yet another embodiment of this aspect of the invention, the controller is configured to receive a brake command via a first data bus, which brake command is configured to cause the rail vehicle to decelerate. This renders the overall brake control in the rail vehicle efficient.

Further, in response to the brake command, the controller is preferably configured to generate a set of control signals configured to control the set of electrically operated brake units, which set of control signals are sent to the set of electrically operated brake units via at least one second data bus. This provides for both efficiency and reliability.

According to another aspect of the invention, the object is achieved by a rail vehicle including the above-proposed controller, a set of common wheel axles and a set of electrically operated brake units, wherein a respective pair of wheels is arranged on each of the wheel axles and each brake unit in the set of electrically operated brake units is configured to brake a respective one of the wheels. The advantages of this rail vehicle, as well as the preferred embodiments thereof are apparent from the discussion above with reference to the proposed controller.

According to another aspect of the invention, the object is achieved by a computer-implemented method for controlling a set of electrically operated brake units in a rail vehicle, which method is performed in processing unit of a controller of the rail vehicle. The method involves determining, repeatedly, a respective adhesion parameter that reflects a friction coefficient between each wheel of the rail vehicle and a rail upon which the wheel travels. The wheels are arranged in pairs of first and second wheels on a respective common wheel axle and each wheel is individually braked via a respective brake unit in the set of electrically operated brake units. The method further involves comparing, repeatedly, the respective adhesion parameters pairwise to one another, wherein in each pair a first adhesion parameter is compared to a second adhesion parameter which first adhesion parameter has been determined for the first wheel on the common wheel axle and which second adhesion parameter has been determined for the second wheel on the common wheel axle. If and only if a ratio between the first and second adhesion parameters is within a predefined threshold interval around a factor one, the method involves reporting a respective adhesion parameter for the common wheel axle to which the first and second adhesion parameters relate. The advantages of this method, as well as the preferred embodiments thereof are apparent from the discussion above with reference to the proposed controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figures 1a-b    schematically illustrate a rail vehicle equipped with a controller according to one embodiment of the invention;

Figures 2a-b    show graphs that exemplify conditions for generating a first type of friction-related alerts according to embodiments of the invention;

Figures 3-4    show graphs that exemplify conditions for generating a second type of friction-related alerts according to embodiments of the invention;

Figure 5    illustrates the communication between the controller and a drive unit according to one embodiment of the invention;

Figure 6    shows a graph illustrating an example of the friction coefficient as a function of wheel slippage; and

Figure 7    illustrates, by means of a flow diagram, the method according to the invention.

DETAILED DESCRIPTION

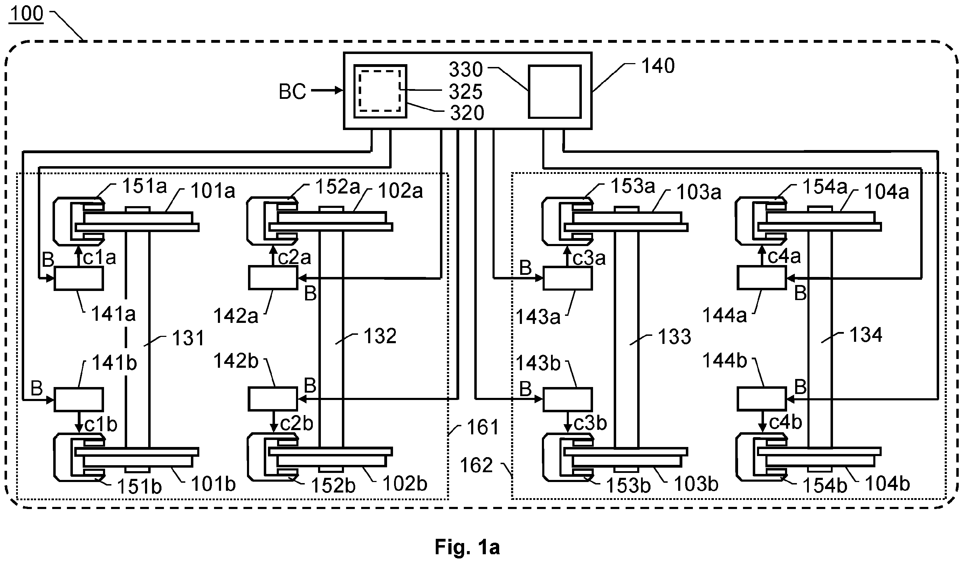

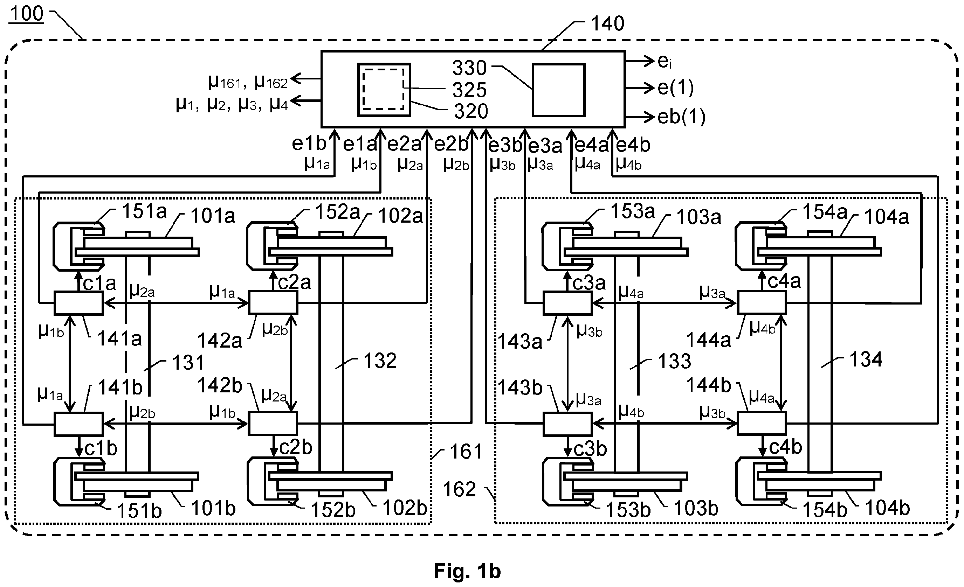

In Figure 1a, we see a schematic illustration of a rail vehicle 100 according to one embodiment of the invention. The rail vehicle 100 has wheels 101a, 101b, 102a, 102b, 103a, 103b, 104a and 104b respectively, which are arranged on common wheel axles 131, 132, 133 and 134 respectively each of which is common for a respective pair of said wheels. Specifically, in the example illustrated in Figure 1, a first pair of wheels 101a and 101b is arranged on a first common wheel axle 131, a second pair of wheels 102a and 102b is arranged on a second common wheel axle 132, a third pair of wheels 103a and 103b is arranged on a third common wheel axle 133 and a fourth pair of wheels 104a and 104b is arranged on a fourth common wheel axle 134.

Each of the wheels 101a, 101b, 102a, 102b, 103a, 103b, 104a and 104b respectively has a dedicated brake unit, which is configured to apply a respective brake force to a respective rotating member in response to a brake control signal B from a controller 140. The brake control signal B, in turn, is based on a brake command BC that for example may originate from a driver's cabin or an emergency functionality in the rail vehicle 100, which for example may be passenger-activated with a bypass option. In the present case, for simplicity, each brake unit has been illustrated by means of a respective brake controller configured to control the operation of a pair of pressing members, e.g. in the form of a caliper with brake pads, acting directly on the wheel in question to cause the rail vehicle 100 to reduce its speed. Of course, in practice, each of the wheels may equally well be mechanically linked to a respective rotating member, upon which, in turn, the pair of pressing members act.

Specifically, in the embodiment illustrated in Figure 1a, at the first wheel 101a, a first brake unit is arranged that includes a first brake controller 141a configured to control a first pair of pressing members 151a via a first control signal c1a, at the second wheel 101b, a second brake unit is arranged that includes a second brake controller 141b configured to operate a second pair of pressing members 151b via a second control signal c1b, at the third wheel 102a, a third brake unit is arranged that includes a third brake controller 142a configured to operate a third pair of pressing members 152a via a third control signal c2a, at the fourth wheel 102b, a fourth brake unit is arranged that includes a fourth brake controller 142b configured to operate a fourth pair of pressing members 152b via a fourth control signal c2b, at the fifth wheel 103a, a fifth brake unit is arranged that includes a fifth brake controller 143a configured to operate a fifth pair of pressing members 153a via a fifth control signal c3a, at the sixth wheel 103b, a sixth brake unit is arranged that includes a sixth brake controller 143b configured to operate a sixth pair of pressing members 153b via a sixth control signal c3b, at the seventh wheel 104a, a seventh brake unit is arranged that includes a seventh brake controller 144a configured to operate a seventh pair of pressing members 154a via a seventh control signal c4a, and at the eighth wheel 104b, an eighth brake unit is arranged that includes an eighth brake controller 144b configured to operate an eighth brake pair of pressing members 154b via an eighth brake control signal c4b.

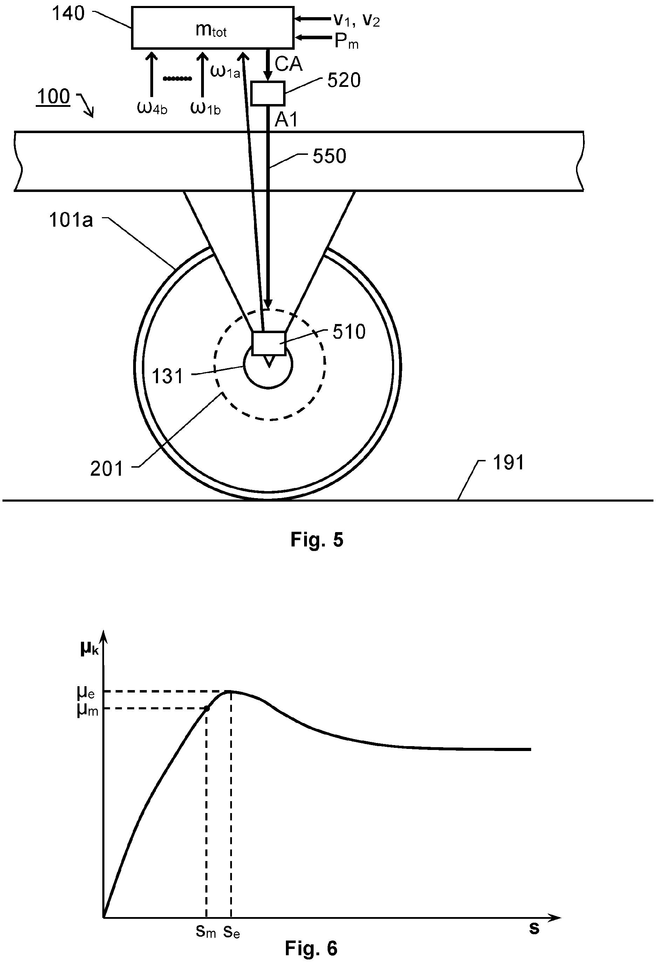

Referring now to Figure 1b, we see the same components and units as described above with reference to Figure 1a. Figure 1b, however, shows the signals and parameters that are specifically applicable according to the present invention and the embodiments thereof According to the invention, the controller 140 is further configured to repeatedly determine a respective adhesion parameter $\mu_{1a}$, $\mu_{1a}$, $\mu_{2a}$, $\mu_{2b}$, $\mu_{3a}$, $\mu_{3b}$, $\mu_{4a}$ and $\mu_{4b}$ respectively that reflects a friction coefficient between each wheel 101a, 101b, 102a, 102b, 103a, 103b, 104a and 104b respectively of the rail vehicle 100 and a rail upon which the wheel in question travels. One procedure for determining the friction coefficient $\mu e$ will be described below referring to Figure 6. Since the wheels are rigidly arranged in pairs of first and second wheels on the respective common wheel axles 131, 132, 133 and 134 as described above, it is expected that the adhesion parameters for the first and second wheels be very similar to one another, i.e. that the value of $\mu_{1a}$ is very similar to the value of $\mu_{1a}$, the value of $\mu_{2a}$ is very similar to the value of $\mu_{2b}$, the value of $\mu_{3a}$ is very similar to the value of $\mu_{3b}$ and the value of $\mu_{4a}$ is very similar to the value of $\mu_{4b}$. However, for various reasons, e.g. due to component wear, malfunction and/or sporadic anomalies, the adhesion parameters for the first and second wheels may be less similar to one another than expected. To spot such events, and avoid propagating erroneous adhesion parameters the controller 140 is configured to repeatedly compare, e.g. 10 to 100 times per second, the respective adhesion parameters $\mu_{1a}$ and $\mu_{1b}$; $\mu_{2a}$ and $\mu_{2b}$; $\mu_{3a}$ and $\mu_{3b}$; and $\mu_{4a}$ and $\mu_{4b}$ respectively pairwise to one another, wherein in each pair a first adhesion parameter $\mu_{1a}$, $\mu_{2a}$, $\mu_{3a}$ and $\mu_{4a}$ is compared to a second adhesion parameter $\mu_{1b}$, $\mu_{2b}$, $\mu_{3b}$, and $\mu_{4b}$, which first adhesion parameter has been determined for the first wheel 101a, 102a, 103a and 104a on the common wheel axle 131, 132, 133 and 134 respectively and which second adhesion parameter has been determined for the second wheel 101b, 102b, 103b and 104b on the common wheel axle 131, 132, 133 and 134 respectively.

The controller 140 is configured to report a respective adhesion parameter $\mu_1$, $\mu_2$, $\mu_3$ and $\mu_4$ for a particular one of the common wheel axles 131, 132, 133 and 134 if and only if a ratio $\mu_a/\mu_b$ between the first and second adhesion parameters $\mu_{1a}$, $\mu_{1b}$; $\mu_{2a}$, $\mu_{2b}$; $\mu_{3a}$, $\mu_{3b}$; $\mu_{4a}$ and $\mu_{4b}$ respectively is within a first predefined threshold interval EQ1 around a factor one. I.e. specifically, the controller 140 will only report an adhesion parameter for the first common wheel axle 131 if $\mu_{1a}/\mu_{1b}$ is within the first predefined threshold interval EQ1 around a factor one, the controller 140 will only report an adhesion parameter for the second common wheel axle 132 if $\mu_{2a}/\mu_{2b}$ is within the first predefined threshold interval EQ1 around a factor one, the controller 140 will only report an adhesion parameter for the third common wheel axle 133 if $\mu_{3a}/\mu_{3b}$ is within the first predefined threshold interval EQ1 around a factor one, and the controller 140 will only report an adhesion parameter for the fourth common wheel axle 134 if $\mu_{4a}/\mu_{4b}$ is within the first predefined threshold interval EQ1 around a factor one. Since the first and second adhesion parameters should be very similar to one another the first predefined threshold interval EQ1 is narrow, say $0.999 < EQ1 < 1.001$.

Preferably, provided that the ratio requirement $\mu_a/\mu_b$ is fulfilled, the controller 140 reports a first adhesion parameter $\mu_1$ for the first common wheel axle 131 as: $\mu_1 = (\mu_{1a} + \mu_{1b})/2$, a second adhesion parameter $\mu_2$ for the second common wheel axle 132 as: $\mu_2 = (\mu_{2a} + \mu_{2b})/2$, a third adhesion parameter $\mu_3$ for the third common wheel axle 133 as: $\mu_3 = (\mu_{3a} + \mu_{3b})/2$ and a fourth adhesion parameter $\mu_4$ for the fourth common wheel axle 134 as: $\mu_4 = (\mu_{4a} + \mu_{4b})/2$.

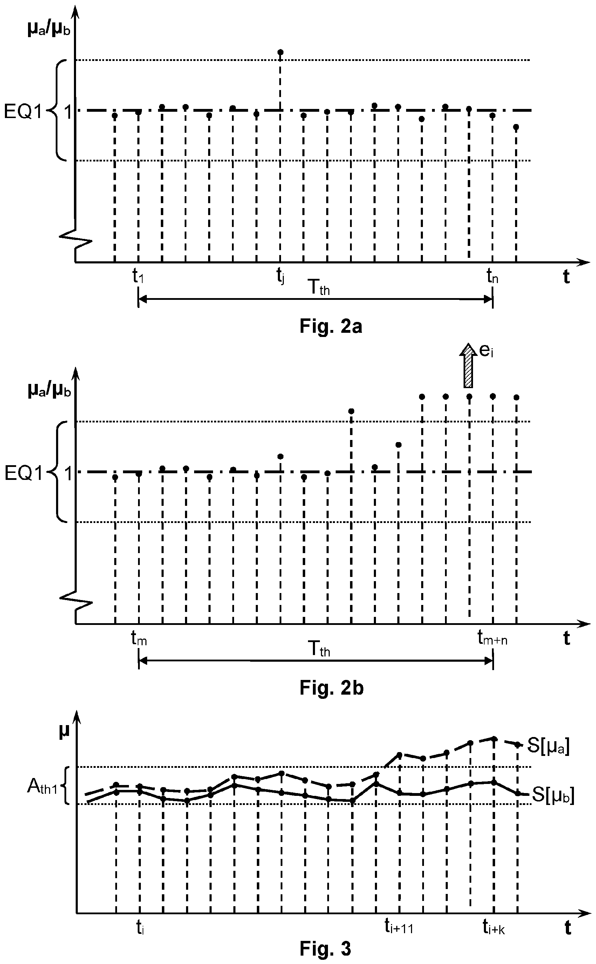

Figures 2a and 2b show graphs that exemplify the conditions for generating a first type of friction-related alerts according to embodiments of the invention. Here, the controller 140 is configured to set an axle-measurement alert $e_i$ in respect of a particular one of the common wheel axles, if, within a sequence $T_{th}$ of repeated determinations, say 15, of the respective adhesion parameter $\mu_{1a}$, $\mu_{1a}$, $\mu_{2a}$, $\mu_{2b}$, $\mu_{3a}$, $\mu_{3b}$, $\mu_{4a}$ and $\mu_{4b}$, the ratio $\mu_a/\mu_b$ between the first and second adhesion parameters the first and second adhesion parameters $\mu_{1a}$, $\mu_{1b}$; $\mu_{2a}$, $\mu_{2b}$; $\mu_{3a}$, $\mu_{3b}$ and $\mu_{4a}$, $\mu_{4b}$ respectively for the particular common wheel axle 131, 132, 133 and/or 134 has not been within the first predefined threshold interval EQ1 around the factor one at a specified fraction, say one third, of the determinations within said sequence $T_{th}$ of repeated determinations. Figure 2a shows a scenario where the ratio $\mu_a/\mu_b$, for example between $\mu_{1a}$ and $\mu_{1b}$ is within the first predefined threshold interval EQ1 and very close to one at all determinations within a sequence $T_{th}$ from $t_1$ to $t_n$ except at one occasion, $t_j$. This is deemed to be a single and isolated error, which is acceptable, or at least not a reason for issuing an alert. Nevertheless, due to the fact that the ratio $\mu_a/\mu_b$, is outside of the first predefined threshold interval EQ1, the controller 140 does not report any adhesion parameter for the first common wheel axle 131 with respect to the determination at the point in time $t_j$.

Figure 2b shows a scenario where the ratio $\mu_a/\mu_b$, for example between $\mu_{2a}$ and $\mu_{2b}$ for the second common wheel axle 132 is within the first predefined threshold interval EQ1 and very close to one at an initial half of the determinations within a sequence $T_{th}$ from $t_m$ to $t_{m+n}$. However, many of the determinations during the latter half of sequence $T_{th}$ lie outside the first predefined threshold interval EQ1, and at one point, the specified fraction of acceptable outliers has been exceeded. Therefore, the controller 140 generates an axle-measurement alert $e_i$ in respect of the second common wheel axle 132. This need not mean that there is brake error or malfunction. However, the axle-measurement alert $e_i$ is an indication of that one of the adhesion parameters for the common wheel axle in question has shown an unacceptably large deviation from an expected value at too many occasions, for example to provide a reliable basis for dynamic brake application.

Figure 3 shows a graph that exemplifies conditions for generating a second type of friction-related alerts according to embodiments of the invention. Here, the controller 140 is further configured to store a respective temporal sequence $S[\mu_a]$ and $S[\mu_b]$ of adhesion parameters for each of the wheels 101a, 101b, 102a, 102b, 103a, 103b, 104a and 104b respectively, where each of the respective temporal sequences $S[\mu_a]$ and $S[\mu_b]$ of adhesion parameters contains a set of consecutively determined adhesion parameters for a particular one of the wheels. Figure 3, exemplifies such temporal sequences for the first and second wheels on a particular common wheel axle, say 131, where the a first temporal sequence $S[\mu_a]$ represents the adhesion parameters for the first wheel 101a and the second temporal sequence $S[\mu_b]$ represents the adhesion parameters for the second wheel 101b and the first temporal sequences $S[\mu_a]$ and $S[\mu_a]$ overlap one another in time with respect to an interval $t_i$ to $t_{i+k}$. The controller 140 is further configured to set a first brake-measurement alert e(1) in respect of a first brake unit 141a/151a under the following circumstances. The first brake unit and a second brake unit 141b/151b are arranged to brake the first and second wheels 101a and 101b respectively on the particular common wheel axle 131. If, within the interval $t_i$ to $t_{i+k}$, the adhesion parameters in the first temporal sequence $S[\mu_a]$ vary by more than a first tolerance threshold $A_{th}$ from one another, and the adhesion parameters in the second temporal sequence $S[\mu_b]$ vary by less than or equal to the first tolerance threshold $A_{th}$, then the controller 140 sets the first brake-measurement alert e(1). Namely, this is another example of an unsound variation between the adhesion parameters, which constitutes an indication of that any adhesion parameters derived from the common wheel axle in question do no provide a reliable basis for dynamic brake application. In Figure 3, the controller 140 issues the first brake-measurement alert e(1) at a point in time ti+n.

According to one embodiment of the invention, the rail vehicle 100 has a set of bogies, which in Figures 1a and 1b are exemplified as first and second bogies 161 and 162 respectively. Each of the bogies 161 and 162 contains a pair of the common wheel axles 131, 132 and 133, 134 respectively. In other words, the first bogie includes the first, second, third and fourth wheels 101a, 101b, 102a and 102b respectively and the second bogie includes the fifth, sixth, seventh and eighth wheels 103a, 103b, 104a and 104b respectively. Analogous to the above, the controller 140 is configured to report a respective bogie adhesion parameter $\mu_{161}$ and $\mu_{162}$ respectively for a particular one of the first and second bogies 161 and 162 if and only if each of a respective pairwise ratio $\mu_{1a}/\mu_{1b}$, $\mu_{1a}/\mu_{2a}$, $\mu_{1a}/\mu_{2b}$ and $\mu_{2a}/\mu_{2b}$ respectively between first, second, third and fourth adhesion parameters $\mu_{1a}$, $\mu_{1b}$, $\mu_{2a}$ and $\mu_{2b}$ respectively is within a second predefined threshold interval around the factor one.

Since, of course, the adhesion parameter is expected to vary substantially more between the wheels on different axles in a bogie than between the wheels on a common wheel axle, the second predefined threshold interval is preferably much larger than the above-mentioned first predefined threshold interval. For example, the second predefined threshold interval may extend from 0.98 to 1.02.

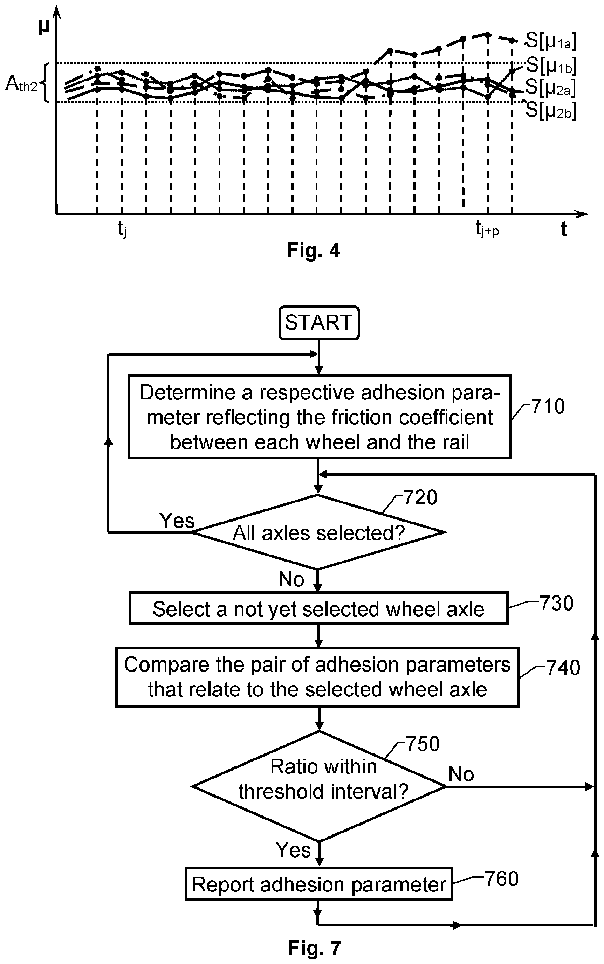

Similar to Figure 3, Figure 4 shows a graph that exemplifies conditions for generating a second type of friction-related alerts according to embodiments of the invention.

Figure 4 shows first, second, third and fourth temporal sequences $S[\mu_{1a}]$, $S[\mu_{1b}]$, $S[\mu_{2a}]$ and $S[\mu_{2b}]$ reflecting the adhesion parameters for each of the first and second wheels 101a, 101b on the first common wheel axle 131 and the third and fourth wheels 102a and 102b on the second common wheel axles respectively in the first bogie 161. The temporal sequences overlap one another in time. In particular, each of the first, second, third and fourth temporal sequences $S[\mu_{1a}]$, $S[\mu_{1b}]$, $S[\mu_{2a}]$ and $S[\mu_{2b}]$ spans an interval from $t_j$ to $t_{j+p}$, which may or may not be equal to the extension of the above interval $t_i$ to $t_{i+k}$. The controller 140 is configured to set a second brake-measurement alert eb(1) in respect of a first brake unit 141a/ 151a in a bogie, say 161, if the adhesion parameters in the first temporal sequence $S[\mu_{1a}]$ for the first wheel 101a vary by more than a second tolerance threshold $A_{th2}$ from one another, and the adhesion parameters in the respective temporal sequence $S[\mu_{1b}]$, $S[\mu_{2a}]$ and $S[\mu_{2b}]$ for the other wheels 101b, 102a and 102b respectively in the bogie 161 vary by less than or equal to the second tolerance threshold $A_{th2}$ from one another.

Since, again, the adhesion parameter is expected to vary substantially more between the wheels on different axles in a bogie than between the wheels on a common wheel axle, the second tolerance threshold $A_{th2}$ is preferably much larger than the first tolerance threshold $A_{th1}$.

Figure 5 illustrates the communication between the controller 140 and a drive unit 510 according to one embodiment of the invention. The drive unit 510 is configured to receive an acceleration control signal A1 from an acceleration controller 520, which, in turn, operates in response to a control message CA from the controller 140. The acceleration control signal A1 may for example be transmitted via the data bus 550. In response to the acceleration control signal A1, the drive unit 510 is configured to drive the first common wheel axle 131. The drive unit 510 may contain at least one electric motor whose generated traction force depends on a magnitude of an electric current fed to it. The acceleration control signal A1 as well as respective rotational speeds $\omega_{1a}$, $\omega_{1b}$, $\omega_{2a}$, $\omega_{2b}$, $\omega_{3a}$, $\omega_{3b}$, $\omega_{4a}$ and $\omega_{4b}$ of the rail vehicle's 100 wheels 101a, 101b, 102a, 102b, 103a, 103b, 104a and 104b will be described below. For example, the rotational speeds $\omega_{1a}$, $\omega_{1b}$, $\omega_{2a}$, $\omega_{2b}$, $\omega_{3a}$, $\omega_{3b}$, $\omega_{43}$ and $\omega_{4b}$ may be determined by means of a respective encoder and/or accelerometer arranged on each of the wheels 101a, 101b, 102a, 102b, 103a, 103b, 104a and 104b.

According to one embodiment of the invention, the controller 140 is configured to obtain a power signal $P_m$ indicating an amount of power being produced by the drive units in addition to the drive unit 510 when accelerating the rail vehicle 100 from a first speed $v_1$ to a second speed $v_2$, for example from a standstill to 10 km/h. Of course, however, according to the invention, the power signal $P_m$ may equally well be received during acceleration of the rail vehicle 100 between any other two speed levels. In any case, the controller 140 is configured to obtain a speed signal indicating respective values of the first and second speeds $v_1$ and $v_2$. The speed signal may originate from a tachometer and/or at least one accelerometer onboard the rail vehicle 100.

Based on the power signal $P_m$ and the values of the first and second speeds $v_1$ and $v_2$, the controller 140 is configured to estimate an overall weight $m_{tot}$ of the rail vehicle 100. This may be done under the assumption that any losses in the motor and losses due to wind and rolling resistance are negligible, which is basically true for low speeds. Provided that the rail vehicle 100 has an onboard accelerometer, it is further possible to take any inclination - positive or negative - of the tracks into account, and thus improve the accuracy of the kinetic energy. Namely, with reservation for inclination, under the assumption that all the supplied power is converted into kinetic energy of the rail vehicle, i.e. $P \cdot t = W_k$, where P is the supplied power, t is the time during which the power has been supplied and $W_k$ is the resulting kinetic energy, it is possible to derive the overall weight $m_{tot}$ of the rail vehicle 100 according to the below.

The resulting kinetic energy $W_k$, in turn, may be expressed as:

$$W_k = m_{tot} \cdot v^2/2,$$

where $v = v_2 - v_1$.

In other words, the controller 140 may calculate the overall weight $m_{tot}$ of the rail vehicle 100 as:

$$m_{tot} = \frac{(v_2 - v_1)^2}{2P \cdot t}$$

A procedure for determining adhesion parameters for each of the wheels will be described below.

Now, we refer to Figure 6, which shows a graph over an example of how a kinetic friction coefficient $\mu_k$ may be expressed as a function of a wheel slippage s. Here, the wheel slippage s is understood to either designate a spinning motion of a wheel relative to the rail or a sliding motion of the wheel relative to the rail. In other words, the wheel slippage s is applicable to an acceleration scenario as well as a retardation ditto.

Characteristically, for lower values, the kinetic friction coefficient $\mu_k$ increases relatively proportionally with increasing wheel slippage s. When approaching a peak value $\mu_e$, however, the kinetic friction coefficient $\mu_k$ levels out somewhat. After having passed the peak value, the kinetic friction coefficient $\mu_k$ is essentially constant for all values of the wheel slippage s. Thus, the friction coefficient peak value $\mu_e$ is associated with an optimal wheel slippage $s_e$ after which a further increase of wheel slippage s results in a gradually reduced, and then almost constant kinetic friction coefficient $\mu_k$.

According to the one embodiment of the invention, the controller 140 is configured to determine a parameter $\mu_m$ that reflects the friction coefficient between at least one of the rail vehicle's 100 wheels and at least one respective rail upon which the rail vehicle 100 travels. Figure 5 exemplifies one such rail in the form of 191.

Ideally, the peak value $\mu_e$ should be derived. For example, an estimate of the peak value $\mu_e$ may be derived as follows. When an absolute difference $|\omega_{1a} - \omega_a|$ between the rotational speed of a particular wheel, say 101a, on a driven common wheel axle 131, and an average rotational speed $\omega_a$ of all the rail vehicle's 100 driven common wheel axles except the specific driven common wheel axle 131 exceeds the threshold value, this corresponds to a situation where the wheels 101a and 101b on the specific driven common wheel axle 131 experience a wheel slippage $s_m$ near the optimal wheel slippage $s_e$. The kinetic friction coefficient $\mu_k$ is given by the expression:

$$\mu_k = \frac{F}{m_{tot} \cdot g}$$

where

F is the drive force applied by the drive unit,
$m_{tot}$ is the overall weight of the rail vehicle 100, and
g is the standard acceleration due to gravity.

Under the assumption that the wheel slippage $s_m$ is near the optimal wheel slippage $s_e$, the peak value $\mu_e$ of the kinetic friction coefficient $\mu_k$ may be estimated

relatively accurately; and the proximity of wheel slippage $s_m$ to the optimal wheel slippage $s_e$ is ensured by said threshold value for the absolute difference $|\omega_{1a} - \omega_a|$ between the rotational speed of the particular wheel 101a and the average rotational speed $\omega_a$ of all the rail vehicle's 100 wheels except the particular wheel 101a.

The adhesion parameter $\mu m$ thus reflects the friction coefficient $\mu_e$ between the particular wheel, here 101a and the rail upon which the particular wheel 101a travels.

As mentioned initially, a rail vehicle 100 may be very long, and consequently contain a substantially larger total number of common wheel axles than what is illustrated in Figures 1a and 1b. Traditionally, each bogie has two common wheel axles carrying altogether four wheels, and each car body of the rail vehicle 100 includes a respective bogie in the front and rear ends.

Referring again to Figures 1b and 5, According to one embodiment of the invention, the controller 140 is further configured to:

(a) obtain wheel speed signals indicating respective rotational speeds $\omega_{1a}$, $\omega_{1b}$, $\omega_{2a}$, $\omega_{2b}$, $\omega_{3a}$, $\omega_{3b}$, $\omega_{43}$ and $\omega_{4b}$ of the wheels 101a, 101b, 102a, 102b, 103a, 103b, 104a and 104b respectively,

(b) produce an acceleration control signal A1 to a specific drive unit 510 such that this drive unit 510 applies a gradually increasing traction force to a particular wheel, here exemplified by 101a,

(c) determine, repeatedly during production of the acceleration control signal A1, an absolute difference $|\omega_{1a} - \omega_a|$ between the rotational speed $\omega_{1a}$ of the particular wheel 101a and an average rotational speed $\omega_a$ of all the wheels except the particular wheel, i.e. here 101b, 102a, 102b, 103a, 103b, 104a and 104b, and in response to the absolute difference $|\omega_{1a} - \omega_a|$ exceeding a threshold value

(d) determine a parameter $\mu_m$ reflecting a friction coefficient $\mu_e$ between the particular wheel 101a and the rail upon which the particular wheel 101a travels.

Finally, the controller 140 is configured to repeat the above steps (a) to (c) for each driven wheel, and based thereon estimate a respective fraction of the overall weight $m_{tot}$ carried by each of these wheels.

It is worth mentioning that the above-mentioned particular driven wheel 101a does not need to be mounted on a particular common wheel axle, e.g. a frontmost or a rearmost common wheel axle of the rail vehicle 100. On the contrary, the above procedure may start with an arbitrary selected driven common wheel axle.

Moreover, it is generally advantageous to execute the above procedure in line with a schedule, fixed or dynamic, wherein each driven wheel alternately either represents the particular wheel or is included in the complement set, i.e. all the wheels except the particular wheel. Repeated execution of procedure is nevertheless beneficial to enable adjustment of the braking functionality in response to any changes in the overall weight $m_{tot}$ and/or a redistribution of the overall weight $m_{tot}$ over the wheels during operation of the rail vehicle 100.

To enable estimation of the axle weights of the non-driven axles, according to one embodiment of the invention, the controller 140 is further configured execute the below procedure.

(e) Obtain wheel speed signals indicating respective rotational speeds $\omega_{1a}$, $\omega_{1b}$, $\omega_{2a}$, $\omega_{2b}$, $\omega_{3a}$, $\omega_{3b}$, $\omega_{43}$ and $\omega_{4b}$ of each of the rail vehicle's 100 wheels 101a, 101b, 102a, 102b, 103a, 103b, 104a, and 104b respectively;

(f) produce a brake control signal, for example over the data bus 550, to a brake unit configured to apply a brake force to the wheel on the non-driven wheel axle such that this brake unit applies a gradually increasing brake force to the wheel;

(g) determine, repeatedly during production of the brake control signa, an absolute difference between the rotational speed of the non-driven common wheel axle and an average rotational speed $\omega_a$ of all the common wheel axles except the non-driven common wheel axle; and in response to the absolute difference exceeding a threshold value, preferably however not necessarily the same threshold value as referred to above in relation to Figure 6;

(h) determine a parameter $\mu_m$ reflecting a friction coefficient $\mu_e$ between each wheel on the specific common wheel axle and the respective rail upon which the wheel travels,

In the general case where the rail vehicle has more than one non-driven axle, the controller 140 is further configured to repeat steps (e) to (g) for each of the non-driven wheel axles, and based thereon estimate a respective fraction $m_4$ of the overall weight $m_{tot}$ carried by each of the non-driven wheel axles.

The controller 140 may be configured to generate a control message CA to make the acceleration controllers produce acceleration control signals, e.g. A1, to the drive units, e.g. 520, such that an average drive force applied to the wheels 102a, 102b, 103a, 103b, 104a and 104b on the wheel axles 132, 133 and 134 except the wheel axle 131 on which the particular wheel 101a is mounted is gradually decreased when the drive force applied to the wheel axle 131 on which the particular wheel 101a is mounted is gradually *increased.* In other words, the driving on the other common wheel axles 132, 133 and 134 compensate for the somewhat excessive drive force applied to wheel axle 131 on which the particular wheel 101a is mounted.

Preferably, this compensation is temporally matched. This means that the controller 140 is configured to generate the control message CA to cause the acceleration controllers to produce acceleration control signals, such as A1, to the drive units, such as 520, so that, at each point in time, the gradual decrease of the average drive force applied to the common wheel axles 132, 133 and 134 except the specific common wheel axles 131 corresponds to the gradual increase of the drive force applied to the specific common wheel axle 131. Namely, thereby the deviating drive force applied to specific common wheel axle 131 is masked by the opposite deviation represented by the drive force applied to the common wheel axles 132, 133 and 134.

In Figures 1a and 1b, all the common wheel axles 131, 132, 133 and 134 of the rail vehicle 100 are braked. This means that the electrically operated brake unit 141a, 141b, 142a, 142b, 143a, 143b, 144a and 144b respectively is responsible for retarding the wheels on each of the common wheel axles 131, 132, 133 and 134 in response to the brake command BC being received in the controller 140.

Thus, as an alternative to the above-described strategies, according to one embodiment of the invention, the controller 140 is configured to determine the respective adhesion parameters $\mu_{1a}$, $\mu_{1b}$, $\mu_{2a}$, $\mu_{2b}$, $\mu_{3a}$, $\mu_{3b}$, $\mu_{4a}$ and $\mu_{4b}$ respectively as described below.

The controller 140 is configured to determine a particular adhesion parameter $\mu_{m1}$, which particular adhesion parameter $\mu_{m1}$ reflects the friction coefficient $\mu_e$ between a particular wheel, say 101a, and the rail upon which the particular wheel 101a travels by:

(a) obtaining wheel speed signals indicating respective rotational speeds $\omega_{1a}$, $\omega_{1b}$, $\omega_{2a}$, $\omega_{2b}$, $\omega_{3a}$, $\omega_{3b}$, $\omega_{43}$ and $\omega_{4b}$ of each wheel 101a, 101b, 102a, 102b, 103a, 103b, 104a and 104b respectively of the rail vehicle 100;

(b) controlling, via a brake control signal c1a, a specific brake unit, here 141a/151a, such that the specific brake unit applies a gradually increasing brake force to the particular wheel 101a;

(c) determine, repeatedly, during production of the brake control signal c1a, an absolute difference $|\omega_{1a} - \omega_a|$ between the rotational speed of the s particular wheel 101a and an average rotational speed $\omega_a$ of the all the wheels 102a, 102b, 103a, 103b,

104a and 104b on the wheel axles 132, 133 and 134 except the wheel axle on which the particular wheel 101a is mounted; and in response to the absolute difference $|\omega_{1a} - \omega_a|$ exceeding a threshold value
(d) determine the particular adhesion parameter $\mu_{1a}$.

Further, the controller 140 is preferably configured to repeat steps (a) to (c) for each of the wheels 101b, 102a, 102b, 103a, 103b, 104a and 104b of the rail vehicle 100, based thereon estimate a respective weight fraction of the overall weight $m_{tot}$ being carried by each of said wheels. Typically, it may be expected that each wheel on a common wheel axle carries approximately an equal amount of weight.

Analogous to the above, according to one embodiment of the invention, the controller 140 is configured to:

(i) produce the brake control signal c1a to the specific brake unit 151a, and

(ii) produce respective brake control signals c1b, c2a, c2b, c3a, c3b, c4a and c4b respectively to each of the brake units 152a, 152b, 153a, 153b, 154a and 154b arranged to cause brake forces to be applied to the wheels 101b, 102a, 102b, 103a, 103b, 104a and 104b different from the particular wheel 101a, such that an average brake force applied to the wheels 101b, 102a, 102b, 103a, 103b, 104a and 104b different from the particular wheel 101a is gradually decreased when the brake force applied to the particular wheel 101a is gradually increased, so that the controlled stressing of the adhesion interface at the particular wheel 101a is masked not to be noticeable to any passengers in the rail vehicle 100.

Preferably, if the rail vehicle 100 includes the data bus 550, the controller 140 is configured to send respective brake control signals B via the data bus 550.

For further enhanced braking performance, according to one embodiment of the invention, the controller 140 is configured to adapt the applied brake forces being dynamically during the braking process as described below.

While causing the respective brake force to be applied to each of the wheels of the rail vehicle 100, the controller 140 is here configured to:

(i) repeatedly determine the respective adhesion parameters $\mu_{1a}$, $\mu_{1b}$, $\mu_{2a}$, $\mu_{2b}$, $\mu_{3a}$, $\mu_{3b}$, $\mu_{4a}$ and $\mu_{4b}$ reflecting the friction coefficient $\mu_e$ between each wheel 101a, 101b, 102a, 102b, 103a, 103b, 104a and 104b and the respective rail upon which the wheel in question travels.

(ii) based on the respective adhesion parameter $\mu_{1a}$, $\mu_{1b}$, $\mu_{2a}$, $\mu_{2b}$, $\mu_{3a}$, $\mu_{3b}$, $\mu_{4a}$ and $\mu_{4b}$ respectively and the estimated load respectively on each of the wheels, determine the respective largest brake load possible to apply $[BL_i]$ on each of the wheels without exceeding the threshold amount of sliding between the respective wheel and rail, and

(iii) adapt the respective brake forces being applied to each of the wheels 101a, 101b, 102a, 102b, 103a, 103b, 104a and 104b based on the determined respective largest brake load possible to apply [BL$_i$] on each of the wheels without exceeding the threshold amount of sliding between the respective wheel and the rail.

The above procedure enables a very accurate and efficient braking, wherein the actual adhesion conditions at the wheel-to-rail interface are maximally utilized. Thus, a WSP system that may be linked to the brake units will typically not need to be employed.

The controller 140 contains input interfaces configured to receive the brake command BC, the power signal P$_m$, the speed signal expressing the speeds v$_1$ and v$_2$ respectively and the wheel speed signals $\omega_{1a}$, $\omega_{1b}$, $\omega_{2a}$, $\omega_{2b}$, $\omega_{3a}$, $\omega_{3b}$, $\omega_{43}$ and $\omega_{4b}$ respectively indicating the rotational speeds of all the wheels of the rail vehicle 100. Further, the controller 140 contains an output interface configured to provide the control signal CA to enable the acceleration controllers to cause its associated drive unit 510 to produce a respective traction force in response to acceleration control signals A1.

According to one embodiment of the invention, the controller 140 includes processing circuitry in the form of at least one processor 330 and a memory unit 320, i.e. non-volatile data carrier, storing a computer program 325, which, in turn, contains software for making the at least one processor 330 execute the actions mentioned in this disclosure when the computer program 325 is run on the at least one processor 330.

In order to sum up, and with reference to the flow diagram in Figure 7, we will now describe the computer-implemented method for a rail vehicle 100 that is carried out by the controller 140 according to the invention.

In a first step 710, a respective adhesion parameter is determined, which respective adhesion parameter reflects a respective friction coefficient $\mu$e between each wheel of the rail vehicle and the respective rail upon which the wheel in question travels.

In a following step 720, it is checked if all common wheel axles have been selected. Naturally, at a first run-through of the procedure, this condition is not fulfilled; and therefore, s step 730 follows. If, however, all common wheel axles have been selected, the procedure loops back to step 710 for a renewed determination of the adhesion parameters.

In step 730, a not yet selected common wheel axle is selected. Thereafter, in a step 740, the respective adhesion parameters for the wheels of the selected common wheel axle are compared to one another.

In a subsequent step 750, it is checked if a ratio the first and second adhesion parameters is within a predefined, narrow, threshold interval around a factor one. If so, a step 760 follows; and otherwise, the procedure loops back to step 720.

In step 760, an adhesion parameter for the selected wheel axles is reported, which adhesion parameter for example constitutes an average of the adhesion parameters for the first and second wheels respectively on the selected common wheel axle.

After step 760, the procedure loops back to step 720.

All of the process steps, as well as any subsequence of steps, described with reference to Figure 6 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

Variations to the disclosed embodiments can be understood and effected by those skilled in the art in practicing the claimed invention, from a study of the drawings, the disclosure, and the appended claims.

The invention is not restricted to the described embodiments in the figures, but may be varied freely within the scope of the claims.

**Claims**

1. A controller (140) for controlling a set of electrically operated brake units (141a, 151a; 141b, 151b; 142a, 152a; 142b, 152b; 143a, 153a; 143b, 153b; 144a, 154a; 144b, 154b) of a rail vehicle (100), **characterized in that** the controller (140) is configured to:

   determine, repeatedly, a respective adhesion parameter ($\mu_{1a}$, $\mu_{1a}$, $\mu_{2a}$, $\mu_{2b}$, $\mu_{3a}$, $\mu_{3b}$, $\mu_{4a}$, $\mu_{4b}$) reflecting a friction coefficient ($\mu e$) between each wheel (101a, 101b, 102a, 102b, 103a, 103b, 104a, 104b) of the rail vehicle (100) and a rail upon which the wheel travels, the wheels being arranged in pairs of first and second wheels on a respective common wheel axle (131, 132, 133, 134), and each wheel being individually braked via a respective brake unit in the set of electrically operated brake units,
   compare, repeatedly, the respective adhesion parameters ($\mu_{1a}$, $\mu_{1b}$, $\mu_{2a}$, $\mu_{2b}$, $\mu_{3a}$, $\mu_{3b}$, $\mu_{4a}$, $\mu_{4b}$) pairwise to one another, wherein in each pair a first adhesion parameter ($\mu_{1a}$; $\mu_{2a}$; $\mu_{3a}$; $\mu_{4a}$) is compared to a second adhesion parameter ($\mu_{1b}$; $\mu_{2b}$; $\mu_{3b}$; $\mu_{4b}$) which first adhesion parameter has been determined for the first wheel (101a; 102a; 103a; 104a) on the common wheel axle (131, 132, 133, 134) and which second adhesion parameter has been determined for the second wheel (101b; 102b; 103b; 104b) on the common wheel axle (131, 132, 133, 134), and
   report a respective adhesion parameter ($\mu_1$, $\mu_2$, $\mu_3$, $\mu_4$) for one of said common wheel axles (131, 132, 133, 134) if and only if a ratio ($\mu_a/\mu_b$) between the first and second adhesion parameters ($\mu_{1a}$, $\mu_{1b}$; $\mu_{2a}$, $\mu_{2b}$; $\mu_{3a}$, $\mu_{3b}$; $\mu_{4a}$, $\mu_{4b}$) is within a first predefined threshold interval (EQ1) around a factor one.

2. The controller (140) according to claim 1, wherein the controller (140) is configured to set an axle-measurement alert ($e_i$) in respect of a particular one of the common wheel axles, if, within a sequence ($T_{th}$) of repeated determinations of the respective adhesion parameter ($\mu_{1a}$, $\mu_{1a}$, $\mu_{2a}$, $\mu_{2b}$, $\mu_{3a}$, $\mu_{3b}$, $\mu_{4a}$, $\mu_{4b}$), the ratio ($\mu_a/\mu_b$) between the first and second adhesion parameters ($\mu_{1a}$, $\mu_{1b}$; $\mu_{2a}$, $\mu_{2b}$; $\mu_{3a}$, $\mu_{3b}$; $\mu_{4a}$, $\mu_{4b}$) for the particular common wheel axle has not been within the first predefined threshold interval (EQ1) around the factor one at a specified fraction of the determinations within said sequence ($T_{th}$) of repeated determinations.

3. The controller (140) according to claim 2, wherein the controller (140) is further configured to:

   store a respective temporal sequence (S[$\mu_a$], S[$\mu_b$]) of adhesion parameters for each of the wheels (101a, 101b, 102a, 102b, 103a, 103b, 104a, 104b), wherein each of the respective temporal sequences (S[$\mu_a$], S[$\mu_b$]) of adhesion parameters comprises a set of consecutively determined adhesion parameters for a particular one of the wheels, and
   set a first brake-measurement alert (e(1)) in respect of a first brake unit (141a, 151a) if the first brake unit and a second brake unit (141b, 151b) are arranged to brake the first and second wheels (101a; 101b) respectively on the particular one (131) of the common wheel axles, the adhesion parameters in a first temporal sequence (S[$\mu_a$]) for a first wheel (101a) vary by more than a first tolerance threshold ($A_{th}$) from one another, and the adhesion parameters in a second temporal sequence (S[$\mu_b$]) for a second wheel (101b) vary by less than or equal to the first tolerance threshold ($A_{th}$) from one another, which second temporal sequence (S[$\mu_b$]) overlap the first temporal sequence (S[$\mu_a$]).

4. The controller (140) according to any of the preceding claims, wherein the rail vehicle (100) comprises a set of bogies (161, 162) each of which comprises a pair of said common wheel axles (131, 132; 133, 134), and the controller (140) is configured to:
   report a respective bogie adhesion parameter ($\mu_{161}$, $\mu_{162}$) for a particular one of said bogies (161; 162) if and only if each of a respective pairwise ratio ($\mu_{1a}/\mu_{1b}$; $\mu_{1a}/\mu_{2a}$; $\mu_{1a}/\mu_{2b}$; $\mu_{2a}/\mu_{2b}$) between first, second, third and fourth adhesion parameters ($\mu_{1a}$, $\mu_{1b}$; $\mu_{2a}$, $\mu_{2b}$) is within a second predefined threshold interval around the factor one.

5. The controller (140) according to claim 4, wherein the controller (140) is configured to:
   set a second brake-measurement alert (eb(1)) in respect of a first brake unit (141a, 151a) in a bogie (161) if the adhesion parameters in the first temporal sequence (S[$\mu_{1a}$]) for the first wheel (101a) vary by more than a second tolerance threshold ($A_{th2}$) from one another, and the adhesion parameters in a respective temporal sequence (S[$\mu_{1b}$], S[$\mu_{2a}$], S[$\mu_{2b}$]) for the other wheels (101b, 102a, 102b) in the bogie (161) vary by less than or equal to the second tolerance threshold ($A_{th2}$) from one another, which respective temporal sequences overlap the first temporal sequence.

6. The controller (140) according to any one of the preceding claims, wherein the controller (140) is configured to estimate a total weight ($m_{tot}$) of the rail vehicle (100) based on:

> a power signal ($P_m$) indicating an amount of power produced by a set of drive units in the rail vehicle (100) when accelerating the rail vehicle (100) from a first speed ($v_1$) to a second speed ($v_2$), and
> a speed signal indicating respective values of the first and second speeds ($v$, , V2).

7. The controller (140) according to claim 6, wherein the controller (140) is configured to determine a particular adhesion parameter ($\mu_{1a}$) of the respective adhesion parameters ($\mu_{1a}$, $\mu_{1a}$, $\mu_{2a}$, $\mu_{2b}$, $\mu_{3a}$, $\mu_{3b}$, $\mu_{4a}$, $\mu_{4b}$), which particular adhesion parameter ($\mu_{1a}$) reflects the friction coefficient ($\mu e$) between a particular wheel (101a) of said wheels and the rail (191) upon which the particular wheel (101a) travels by:

> (a) obtaining wheel speed signals indicating respective rotational speeds ($\omega_{1a}$, $\omega_{1b}$, $\omega_{2a}$, $\omega_{2b}$, $\omega_{3a}$, $\omega_{3b}$, $\omega_{4a}$, $\omega_{4b}$) of each of the wheels (101a, 101b, 102a, 102b, 103a, 103b, 104a, 104b) of the rail vehicle (100),
> (b) controlling a specific brake unit (141a, 151a) to apply a gradually increasing brake force to the particular wheel (101a),
> (c) determine, repeatedly, while controlling the specific brake unit (141a, 151a) to apply the gradually increasing brake force to the particular wheel (101a), an absolute difference ($|\omega_{1a} - \omega_a|$) between a rotational speed of the specific wheel (101a) and an average rotational speed ($\omega_a$) of all the wheels (101b, 102a, 102b, 103a, 103b, 104a, 104b) except the particular wheel (101a); and in response to the absolute difference ($|\omega_{1a} - \omega_a|$) exceeding a threshold value
> (d) determine the particular adhesion parameter ($\mu_{1a}$).

8. The controller (140) according to any one of the preceding claims, wherein the controller (140) is configured to receive a brake command (BC) via a first data bus, which brake command (BC) is configured to cause the rail vehicle (100) to decelerate.

9. The controller (140) according to claim 8, wherein, in response to the brake command (BC), the controller (140) is configured to generate a set of control signals (c1 a, c1b, c2a, c2b, c3a, c3b, c4a, c4b) configured to control the set of electrically operated brake units (141a, 151a; 141b, 151b; 142a, 152a; 142b, 152b; 143a, 153a; 143b, 153b; 144a, 154a; 144b, 154b), which set of control signals are sent to the set of electrically operated brake units via at least one second data bus (550).

10. A computer-implemented method for controlling a set of electrically operated brake units (141a, 151a; 141b, 151b; 142a, 152a; 142b, 152b; 143a, 153a; 143b, 153b; 144a, 154a; 144b, 154b) of a rail vehicle (100), which method is performed in processing unit (330) of a controller (140) in the rail vehicle (100), and which method is **characterized by**:

> determining, repeatedly, a respective adhesion parameter ($\mu_{1a}$, $\mu_{1a}$, $\mu_{2a}$, $\mu_{2b}$, $\mu_{3a}$, $\mu_{3b}$, $\mu_{4a}$, $\mu_{4b}$) reflecting a friction coefficient ($\mu e$) between each wheel (101a, 101b, 102a, 102b, 103a, 103b, 104a, 104b) of the rail vehicle (100) and a rail upon which the wheel travels, the wheels being arranged in pairs of first and second wheels on a respective common wheel axle (131, 132, 133, 134), and each wheel being individually braked via a respective brake unit in the set of electrically operated brake units,
> comparing, repeatedly, the respective adhesion parameters ($\mu_{1a}$, $\mu_{1b}$, $\mu_{2a}$, $\mu_{2b}$, $\mu_{3a}$, $\mu_{3b}$, $\mu_{4a}$, $\mu_{4b}$) pairwise to one another, wherein in each pair a first adhesion parameter ($\mu_{1a}$; $\mu_{2a}$; $\mu_{3a}$; $\mu_{4a}$) is compared to a second adhesion parameter ($\mu_{1b}$; $\mu_{2b}$; $\mu_{3b}$; $\mu_{4b}$) which first adhesion parameter has been determined for the first wheel (101a; 102a; 103a; 104a) on the common wheel axle (131, 132, 133, 134) and which second adhesion parameter has been determined for the second wheel (101b; 102b; 103b; 104b) on the common wheel axle (131, 132, 133, 134), and
> reporting a respective adhesion parameter ($\mu_1$, $\mu_2$, $\mu_3$, $\mu_4$) for one of said common wheel axles (131, 132, 133, 134) if and only if a ratio ($\mu_a/\mu_b$) between the first and second adhesion parameters ($\mu_{1a}$, $\mu_{1b}$; $\mu_{2a}$, $\mu_{2b}$; $\mu_{3a}$, $\mu_{3b}$; $\mu_{4a}$, $\mu_{4b}$) is within a predefined threshold interval (EQ) around a factor one.

11. A computer program (325) loadable into a non-volatile data carrier (320) communicatively connected to at least one processor (430), the computer program (325) comprising software for executing the method according to claim 10 when the computer program (325) is run on the at least one processor (330).

12. A non-volatile data carrier (320) containing the computer program (325) of the claim 11.

13. A rail vehicle (100) comprising:

> a set of common wheel axles (131, 132, 133, 134), wherein on each common wheel axle, a respective pair of wheels (101a, 101b; 102a, 102b; 103a, 103b; 104a, 104b) are arranged, and

a set of electrically operated brake units (141a, 151a; 141b, 151b; 142a, 152a; 142b, 152b; 143a, 153a; 143b, 153b; 144a, 154a; 144b, 154b), wherein each of said brake units is configured to brake a respective one of said wheels,

**characterized in that** the rail vehicle (100) comprises the controller (140) according to any one of claims 1 to 9.

14. The rail vehicle (100) according to claim 13, wherein each of said brake units comprises:

a respective brake control unit (141a, 141b, 142a, 142b, 143a, 143b, 144a, 144b), and a respective electromechanical brake unit (151a, 151b, 152a, 152b, 153a, 153b, 154a, 154b), comprising at least one respective pressing member is configured to apply a retarding force to rotatable member being mechanically linked to a particular one of said wheels.

15. The rail vehicle (100) according to claim 14, wherein the common wheel axles (131, 132; 133, 134) are organized pairwise in bogies (161, 162), and the brake control units in each of said bogies are configured to exchange the respective adhesion parameters ($\mu_{1a}$, $\mu_{1b}$, $\mu_{2a}$, $\mu_{2b}$; $\mu_{3a}$, $\mu_{3b}$, $\mu_{4a}$, $\mu_{4b}$) between one another.

Fig. 1a

**Fig. 1b**

**Fig. 2a**

**Fig. 2b**

**Fig. 3**

**Fig. 5**

**Fig. 6**

**Fig. 4**

**Fig. 7**

Europäisches
Patentamt

European
Patent Office

Office européen
des brevets

# EUROPEAN SEARCH REPORT

Application Number

EP 23 20 9574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 753 508 B1 (KNORR-BREMSE SYSTEME FÜR SCHIENENFAHRZEUGE GMBH [DE]) 15 November 2017 (2017-11-15) * Fig. 3-4; par. [0001], [0002], [0006], [0011], [0016], [0020], [0026]-[0028]; claim 1 * | 1-15 | INV.<br>B60T13/74<br>B60T8/17<br>B60T8/171<br>B60T8/1763<br>B60T17/22<br>B60T8/172 |
| A | US 2020/377064 A1 (FREA MATTEO [IT] ET AL) 3 December 2020 (2020-12-03) * (Fig. 1-2; par. [0002], [0029], [0046]-[0048], [0063]; claim 1 * | 1-15 | ADD.<br>B60T8/18 |
| A | EP 1 746 000 B1 (KNORR BREMSE SYSTEME [DE]) 29 February 2012 (2012-02-29) * Fig. 1; par. [0009], [0014], [0017]-[0022] * | 1-15 | |

TECHNICAL FIELDS
SEARCHED     (IPC)

B60T

The present search report has been drawn up for all claims

| Place of search | Date of completion of the search | Examiner |
|---|---|---|
| Munich | 15 April 2024 | Kirov, Youlian |

EPO FORM 1503 03.82 (P04C01)

## ANNEX TO THE EUROPEAN SEARCH REPORT
## ON EUROPEAN PATENT APPLICATION NO.

**EP 23 20 9574**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-04-2024**

| Patent document cited in search report | | | Publication date | Patent family member(s) | | | Publication date |
|---|---|---|---|---|---|---|---|
| EP 2753508 | B1 | | 15-11-2017 | DE | 102011113117 | A1 | 14-03-2013 |
| | | | | EP | 2753508 | A2 | 16-07-2014 |
| | | | | ES | 2660020 | T3 | 20-03-2018 |
| | | | | WO | 2013034691 | A2 | 14-03-2013 |
| US 2020377064 | A1 | | 03-12-2020 | CN | 111417553 | A | 14-07-2020 |
| | | | | EP | 3720742 | A1 | 14-10-2020 |
| | | | | ES | 2913408 | T3 | 02-06-2022 |
| | | | | HU | E058213 | T2 | 28-07-2022 |
| | | | | JP | 7250018 | B2 | 31-03-2023 |
| | | | | JP | 2021505859 | A | 18-02-2021 |
| | | | | RU | 2020121988 | A | 10-01-2022 |
| | | | | US | 2020377064 | A1 | 03-12-2020 |
| | | | | WO | 2019111127 | A1 | 13-06-2019 |
| EP 1746000 | B1 | | 29-02-2012 | AT | E547302 | T1 | 15-03-2012 |
| | | | | DE | 102005034056 | A1 | 01-02-2007 |
| | | | | DK | 1746000 | T3 | 14-05-2012 |
| | | | | EP | 1746000 | A2 | 24-01-2007 |
| | | | | ES | 2382386 | T3 | 07-06-2012 |
| | | | | PL | 1746000 | T3 | 31-08-2012 |

EPO FORM P0459

For more details about this annex : see Official Journal of the European Patent Office, No. 12/82